# FASCICULE DE BREVET EUROPEEN

(11) **EP 4 210 969 B1**
(45) Date de publication et mention de la délivrance du brevet: **12.06.2024**
(21) Numéro de dépôt: 21777203.7
(22) Date de dépôt: 06.09.2021
(51) Int. Cl.: B60B 7/01, B60B 7/06, B60C 13/04

(54) **DISPOSITIF DE PROTECTION POUR FLANC DE PNEU**
VORRICHTUNG ZUM SCHUTZ EINER REIFENSEITENWAND
DEVICE FOR PROTECTING A TYRE SIDEWALL

(30) Priorité: 10.09.2020 FR 2009168
(43) Date de publication de la demande: 19.07.2023
(73) Titulaire: Musthane (Société par Actions Simplifiée), 59780 Willems (FR)
(72) Inventeur: ROSIER, Reza, 7711 Dottignies (BE)
(74) Mandataire: Cabinet Beau de Loménie
(86) Numéro de dépôt international: PCT/EP2021/074445
(87) Numéro de publication internationale: WO 2022/053421

(56) Documents cités:
- WO-A1-89/01878
- DE-U1-202018 104 619
- US-A- 2 970 009
- US-A1- 2007 290 548

## Description

### Domaine technique

La présente invention concerne le domaine de la protection d'un pneu d'une roue d'un véhicule, tel qu'un camion minier ou militaire, ou bien encore un engin tout terrain. Ce type de véhicule étant destiné à évoluer sur des sols accidentés, il est fréquent que les flancs des pneumatiques du véhicule subissent des chocs de nature à endommager ou à crever le pneu, ce qui est susceptible d'imposer l'immobilisation du véhicule afin de procéder aux réparations nécessaires.

L'invention concerne plus particulièrement un dispositif de protection de pneu d'une roue, ainsi qu'un ensemble de roulement comportant une roue et un tel dispositif de protection.

### Technique antérieure

Pour limiter le risque d'endommagement des pneus de véhicules tout terrain, il est connu d'utiliser des dispositifs de protection de pneus. Généralement, ces dispositifs de protection sont conçus pour protéger les flancs des pneus.

Un tel dispositif de protection est notamment décrit dans le document US 2010/0066155. Comme illustré en figures 10 et 11 de ce document antérieur, ce dispositif comporte un bouclier annulaire 1 ayant un bord périphérique intérieur pris en sandwich entre un anneau 7 et une pièce de montage 10, l'anneau 7 et la pièce de montage étant fixés l'un à l'autre par une vis 9. La pièce de montage 10 est quant à elle fixée à la jante 4 par une vis 15.

La structure de ce dispositif de protection, comprenant de nombreuses pièces, est particulièrement complexe, ce qui rend difficile et chronophage le montage du dispositif de protection la roue lorsque le véhicule se trouve sur chantier ou sur un théâtre d'opération militaire.

Les documents DE 20 2018 104619, US 2007/290548 et US2 970 009 décrivent également des dispositifs de protection de pneus. En particulier DE 20 2018 104619 montre un dispositif avec un bouclier en plusieurs parties et dépourvu d'une couronne annulaire.

### Exposé de l'invention

La présente invention a notamment pour but de proposer un dispositif de protection plus robuste et dont le montage à la jante est plus simple et plus rapide que le dispositif antérieur précité.

Pour ce faire, l'invention porte sur un dispositif de protection de pneu d'une roue, comportant :
un bouclier ayant une forme annulaire et comprenant un matériau polymère, le bouclier ayant un bord périphérique externe et une portion périphérique interne opposée au bord périphérique externe ;
une couronne pour le montage du dispositif de protection à une jante de la roue, la couronne ayant un centre et étant solidaire du bouclier et comprenant :
   une partie de liaison pour la liaison solidaire de la couronne au bouclier;
   une partie de montage, formant une seule pièce avec la partie de liaison, munie d'une pluralité d'éléments de montage pour le montage de la couronne à la jante, la partie de montage étant située radialement entre le centre de la couronne et la partie de liaison et comportant une pluralité de protubérances en forme d'oreilles réparties selon la circonférence de la partie de montage en étant angulairement distantes les unes des autres, chaque protubérance faisant radialement saillie vers le centre de la couronne et comprenant au moins un des éléments de montage.

Les protubérances forment donc une seule pièce avec la partie de montage et avec la partie de liaison de la couronne. Cette structure monobloc, qui nécessite moins de pièces que le dispositif de l'art antérieur, offre une meilleure robustesse. En outre, comme le dispositif de protection selon l'invention nécessite moins de vis de fixation que le dispositif antérieur, sa fabrication et surtout sa mise en oeuvre sont facilités, notamment sur le terrain. En outre, le temps de montage et démontage est plus court qu'avec le dispositif antérieur.

On comprend par ailleurs que les protubérances, en forme d'oreilles, constituent des excroissances radiales réparties angulairement selon la circonférence de la périphérie intérieure de la couronne. De préférence, mais non nécessairement, la distance angulaire entre deux éléments de montage adjacents est identique pour tous les éléments de montage.

De préférence, les protubérances s'étendent dans le même plan que la partie de liaison. Sans sortir du cadre de la présente invention, les protubérances pourraient être inclinées, afin de se conformer à la structure de la jante.

Le bord périphérique externe du bouclier est configuré pour venir en appui contre le flanc du pneu. Cela permet non seulement de protéger le flanc du pneu contre les chocs latéraux mais aussi d'éviter que des cailloux ou autres objets puissent s'engager entre le bouclier et le flanc du pneu.

Le bouclier présente de préférence une forme annulaire incurvée. Autrement dit, la section transversale du bouclier est courbée ou arrondie. Cette courbure est dimensionnée de façon à absorber la variation du galbe du pneu pendant toutes les phases de conduite, et quel que soit le niveau de gonflage du pneu.

Encore de préférence, le bouclier est un élément composite comportant, en sus du matériau polymère, plusieurs couches de tissus drapées.

Avantageusement, les éléments de montage comprennent des orifices pour recevoir des organes de fixation de la jante.

Ces organes de fixation sont par exemple constitués de goujons ou de tiges filetés, par exemple les goujons qui participent à la fixation les parties de jantes entre elles dans le cas des jantes constituées de plusieurs parties.

On comprend que les orifices sont ménagés dans les protubérances et sont constitués de perçages dont les axes sont parallèles à l'axe de la couronne.

De préférence, chaque protubérance comporte un des orifices. Encore de préférence, chaque protubérance comporte un et un seul des orifices.

Selon un mode de réalisation préférentiel, la partie de montage s'étend radialement vers le centre de la couronne hors de la portion périphérique interne du bouclier.

Avantageusement, la partie de liaison est noyée dans la portion périphérique interne du bouclier. Autrement dit, la partie de liaison est scellée dans le matériau polymère constituant le bouclier. Un intérêt est permettre une liaison entre la couronne et le bouclier qui soit dépourvue de vis, afin de faciliter la fabrication et augmenter la robustesse du dispositif de protection selon l'invention, aucun élément de fixation, tel une vis par exemple, n'étant alors exposé aux chocs ou aux liquides.

Pour améliorer la liaison entre la couronne et le bouclier, la partie de liaison comporte préférentiellement des éléments de maintien, et le dispositif de protection comporte en outre des fils textiles qui coopèrent avec les éléments de maintien tout en étant noyés dans le matériau polymère.

La coopération entre les éléments de maintien et les fils textiles assure le maintien entre les fils et la couronne ; dans le même temps, les fils sont scellés dans le matériau polymère constitutif du bouclier.

Selon un mode de réalisation préférentiel, les éléments de maintien sont des trous qui traversent axialement la couronne en étant disposés selon la circonférence de la partie de fixation, les fils textiles étant engagés dans les trous de façon à s'étendre de part et d'autre de la partie de liaison. Les trous présentent préférentiellement une forme oblongue est sont répartis selon la circonférence de la partie de fixation.

Cet agencement permet de garantir d'une part la rigidité de la liaison entre la couronne et le bouclier dans le sens du drapage et d'autre part favoriser la tenue du bouclier sur la couronne.

Avantageusement, le matériau polymère est un élastomère, de préférence un styrène-butadiène (SBR en anglais). Les inventeurs ont constaté que le bouclier réalisé dans cette matière présente une très bonne résistance à l'abrasion et une bonne tenue au déchirement.

Pour améliorer la résistance du bouclier au déchirement, le bouclier comporte en outre au moins une armature, de préférence un tricot réalisé à partir de fils de métal.

De préférence, la couronne est métallique, par exemple en acier.

Selon un aspect avantageux de l'invention, le bord périphérique externe s'étend dans un plan qui est sensiblement coplanaire à la couronne.

Comme le flanc du pneu est généralement galbé, la face de la jante est en retrait par rapport au flanc. Aussi, lors de la mise en place du dispositif de protection, le bord périphérique externe vient au contact contre le flanc du pneu avant que la couronne ne soit fixée à la jante. L'utilisateur doit si nécessaire exercer une légère poussée axiale sur la couronne de façon à finaliser la fixation de la couronne à la jante. Ceci a pour effet que le bouclier, cherchant à reprendre sa forme initiale dans laquelle le bord périphérique externe est sensiblement dans le même plan que la couronne, subit une contrainte en déformation qui tend à plaquer le bord périphérique externe contre le flanc du pneu. Un intérêt est d'assurer un appui permanent entre le bouclier et le flanc du pneu, de façon à empêcher ou à tout le moins limiter sensiblement l'entrée de matériaux ou objets entre le bouclier et le pneu.

De préférence, le dispositif de protection selon l'invention est réalisé dans un moule qui présente la conformation du bouclier, les couches textiles du matériau composite constituant le bouclier étant drapées. L'ensemble est ensuite vulcanisé en autoclave.

L'invention concerne également un ensemble de roulement comportant :
une roue comprenant une jante munie d'un rebord intérieur et d'un rebord extérieur, et un pneu ayant au moins un flanc ainsi que des premier et second talons montés contre les rebords intérieur et extérieur de la jante ; et
un dispositif de protection selon l'invention, la couronne étant fixée à la jante.

De préférence, le bord périphérique externe du bouclier est en appui contre le flanc du pneu en exerçant une pression contre ledit flanc.

Comme expliqué ci-dessus, cet appui permet d'assurer le contact entre le bouclier et le pneu, et ainsi éviter à des corps étrangers, de s'engager entre le bouclier et le pneu, ce qui serait de nature à endommager le pneu.

Selon un mode de réalisation préférentiel, mais non exclusif, la jante est constituée d'une première partie de jante incluant le rebord intérieur, et d'une seconde partie de jante incluant le rebord extérieur, les première et seconde parties de jante étant fixées l'une à l'autre par des organes de fixation, et les éléments de montage de la couronne sont montés à au moins certains des organes de fixation.

Ce type de jante en deux parties, connu par ailleurs, permet notamment de simplifier le montage du pneu sur la jante.

Grâce à l'invention, le montage du dispositif de protection à la jante est rapide et ne nécessite pas d'équipement spécifique autre que les composants et outils utilisés habituellement pour monter ou démonter les première et seconde parties de jante l'une avec l'autre.

On comprend donc que les protubérances sont engagés avec au moins certaines des organes de fixation.

Selon un mode particulièrement avantageux de l'invention, le nombre d'éléments de montage est strictement inférieur au nombre d'organes de fixation, de préférence inférieur ou égal à la moitié du nombre d'organes de fixation.

Un intérêt est de permettre un montage rapide du dispositif de protection à la jante, sans risquer le désassemblage des première et seconde parties de jante l'une de l'autre.

De préférence, la couronne est fixée via les éléments de montage à un organe de fixation sur deux ou sur trois.

A titre d'exemple, pour une roue dont la jante comprend vingt-trois organes de fixation, on pourra prévoir huit éléments de montage, c'est-à-dire huit protubérances et huit orifices.

Aussi, au moins un, de préférence deux, des organes de fixation de la jante, non utilisé pour le montage de la couronne, est disposé entre deux protubérances adjacentes.

Selon un mode de réalisation préférentiel, les organes de fixation comprennent des tiges filetées coopérant avec des écrous. Les organes de fixation comprennent préférentiellement des goujons faisant saillie axialement depuis la seconde partie de jante.

Ces goujons coopèrent avec des écrous qui assurent le maintien des première et seconde parties de jantes l'une à l'autre. Les goujons sont maintenus à la première partie de jante et traversent des trous ménagés dans la seconde partie de jante. Des écrous sont vissés aux goujons de façon que la seconde partie de jante soit bloquée entre les écrous et la première partie de jante.

Pour monter le dispositif de protection à la roue, l'opérateur dévisse seulement les écrous des goujons (ou tiges filetées) prévus pour s'engager dans les orifices des protubérances, puis positionne la couronne de sorte que les goujons dépourvus d'écrous viennent s'engager au travers des orifices. Puis, le cas échéant, la couronne est plaquée contre la seconde partie de jante. Enfin, l'utilisateur revisse les écrous qui ont été préalablement retirés afin de bloquer la couronne à la jante, la couronne étant donc bloquée entre les écrous et la seconde partie de jante. Comme mentionné ci-dessus, l'épaisseur de la partie de montage est dimensionnée de sorte que les filets des écrous revissés soient engagés sur les goujons sur toute la longueur des filets des écrous afin de maintenir une fixation correcte entre les première et seconde parties de jante.

### Description des dessins

L'invention sera mieux comprise à la lecture de la description qui suit d'un mode de réalisation de l'invention donné à titre d'exemple non limitatif, en référence aux dessins annexés, sur lesquels :
[Fig. **1****]** La figure **1** illustre, en vue de face, un mode de réalisation du dispositif de protection de pneu selon l'invention ;
[Fig. **2****]** La figure **2** est vue en coupe de côté du dispositif de protection de pneu de la figure **1** ;
[Fig. **3****]** La figure **3** est vue de face de la couronne du dispositif de protection de pneu de la figure **1** ;
[Fig. **4****]** La figure **4** illustre, en vue de face, un ensemble de roulement selon l'invention comprenant une roue de camion à laquelle est monté le dispositif de protection de pneu de la figure **1** ;
[Fig. **5****]** La figure **5** est une vue en coupe de côté de l'ensemble de roulement de la figure **4** ; et
[Fig. **6****]** La figure **6** est une vue partielle du dispositif de la figure **1** illustrant les fils de fixation et, en coupe partielle, le tricot métallique.

### Description détaillée

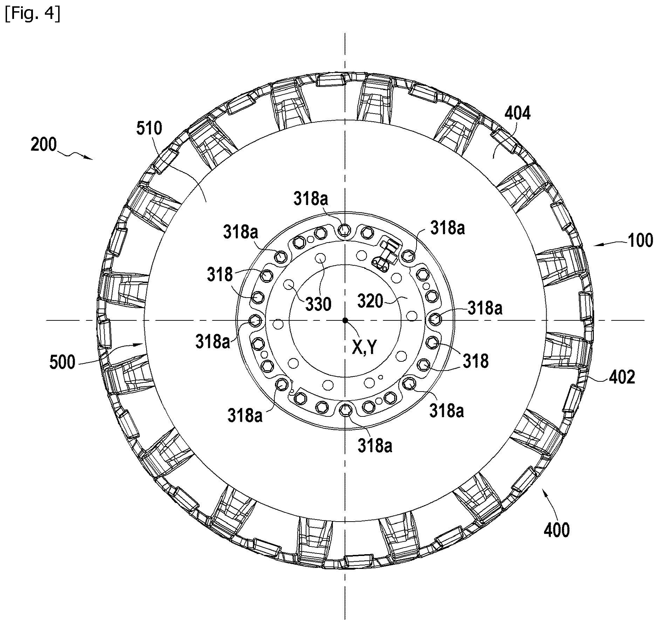

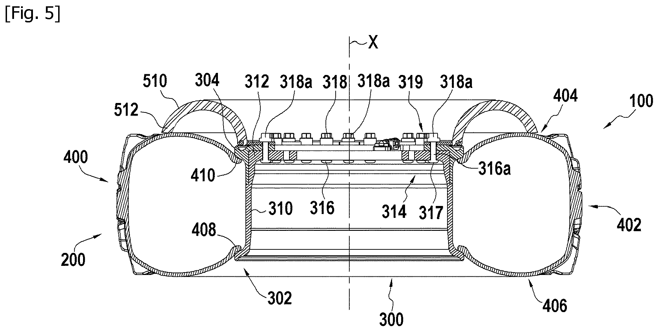

Sur les figures **4** et **5****,** on a illustré un mode de réalisation d'un ensemble de roulement **100** conforme à la présente invention. Cet ensemble de roulement **100** comporte une roue **200,** dans cet exemple une roue de camion, qui comprend une jante **300** munie d'un rebord intérieur **302** et d'un rebord extérieur **304.**

Lorsque la roue **200** est montée au camion, le rebord intérieur **302** est celui qui est du côté de l'essieu, tandis que le rebord extérieur **304,** opposé au rebord intérieur, est situé côté extérieur du véhicule.

De façon connue, les rebords intérieur et extérieur **302, 304** présentent une forme annulaire, tandis que la jante présente la forme générale d'une virole présentant un axe **X** correspondant à l'axe de rotation de la roue **200.**

Dans cet exemple, la jante comprend une première partie de jante **300** qui inclut le rebord intérieur **302,** ainsi qu'une seconde partie de jante **320** qui inclut le rebord extérieur **304.** Comme on le comprend à l'aide de la figure **5****,** la première partie de jante **310** comporte une longueur axiale qui est sensible égale à la longueur axiale de la jante, tandis que la seconde partie de jante **320** présente une forme de cerclage conformé pour s'engager avec une première partie d'extrémité **312** de la première partie de jante **310** qui est opposée au rebord intérieur **302.**

On comprend que les première et seconde parties de jante **310, 320** sont coaxiales selon l'axe **X.**

En référence à la figure **4****,** on constate que la première partie de jante comporte par ailleurs des perçages **330** qui sont disposés radialement à l'intérieur des organes de fixation, ces perçages étant au nombre de dix, et étant destinés à coopérer avec les goujons du moyeu de l'essieu.

Les première et seconde parties de jante sont fixées l'une à l'autre par des organes de fixation **314** qui comportent des goujons **316** et des écrous **318.**

Comme on comprend de la figure **5****,** les goujons **316** présentent une première extrémité comprenant un épaulement **317** qui vient en butée contre une face interne de la première partie d'extrémité **312** de la première partie de jante **310,** cette face interne étant perpendiculaire à l'axe **X.**

Les goujons **316** s'étendent selon une direction parallèle à l'axe **X,** chaque goujon **316** comporte par ailleurs une extrémité **319** - opposée à l'épaulement **317** - qui est filetée et qui est configurée pour coopérer avec un des écrous **318.** La première partie de jante est munie de trous dans lequel sont engagés les goujons **316**

On comprend donc que la seconde partie de jante **320** est fixée à la première partie de jante en étant prise en sandwich entre les écrous **318** et la première partie de jante **310.** Dans cet exemple, la jante comporte vingt-trois goujons qui participent à la fixation des première et seconde parties de jante **310, 320,** l'une à l'autre.

On note par ailleurs que les organes de fixation sont disposés selon la circonférence de la jante et plus particulièrement sur une circonférence de la seconde partie de jante **320.**

La roue **200** comporte par ailleurs un pneu **400** ayant une bande de roulement **402** qui est située entre un flanc extérieur **404** et un flanc intérieur **406.** Le pneu **400** comporte en outre, de manière connue, un premier talon **408,** et un second talon **410,** le premier talon **408** étant monté contre le rebord intérieur **302** de la jante **300,** tandis que le second talon **410** est monté contre le rebord extérieur **304** de la jante.

De façon connue, pour monter le pneu **400** à la jante **300,** on engage tout d'abord le pneu sur la première partie de jante **310,** après quoi on assemble la seconde partie de jante **320** avec la première partie de jante **310** de façon à engager les goujons **316** de la première partie de jante **310** dans les orifices de la seconde partie de jante **320.** Puis, on visse les boulons **318** pour solidariser les première et seconde parties de jante **319, 320** ensemble.

Conformément à l'invention, l'ensemble de roulements **100** comporte par ailleurs un dispositif de protection **500** destiné à protéger le pneu **400** de la roue **200,** et plus précisément le flanc extérieur **404** du pneu **400.**

Comme on le comprend aux figures **4** et **5****,** le dispositif de protection **500** est monté à la jante **300** de façon à protéger le flanc extérieur **404** du pneu **400.**

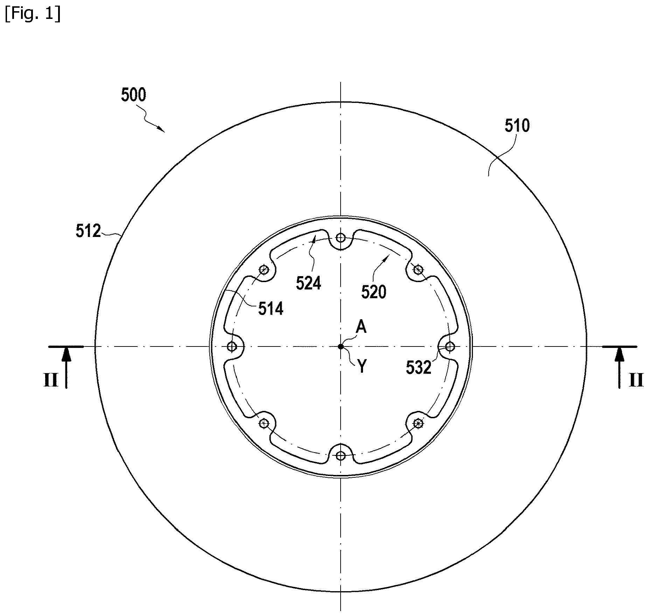

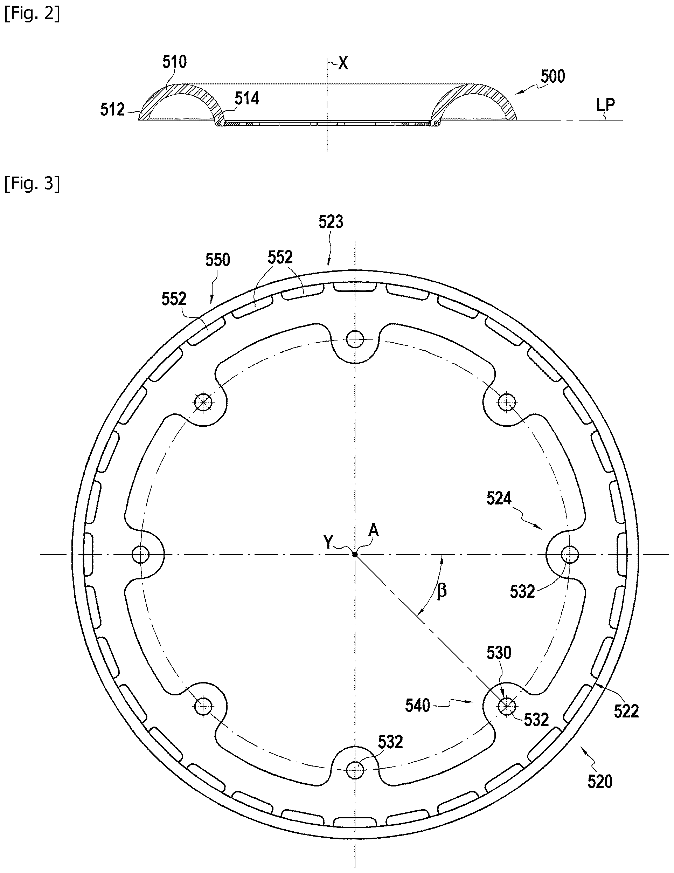

En se référant aux figures **1** et **2****,** on constate que le dispositif de protection **500** comporte un bouclier **510** ayant une forme annulaire. Dans cet exemple le bouclier **510** est constitué d'un matériau composite comprenant un matériau polymère, de préférence un élastomère et encore de façon plus préférentielle un styrène-butadiène (SBR).

En se référant à nouveau à la figure **4****,** on constate que le bouclier **510** est conformément pour recouvrir une partie du flanc extérieur **404,** de façon à protéger ce flanc contre des chocs latéraux, susceptibles d'endommager le pneu.

Le bouclier **510** comprend un rebord périphérique externe **512** qui, comme illustré en figure **5****,** est conformé pour venir en appui contre le flanc extérieur **404.** Le bouclier comporte par ailleurs une portion périphérique interne **514,** qui est opposée au bord périphérique externe, et qui sera décrit plus en détail ci-dessous.

A l'aide de la figure **2****,** illustrant le bouclier en coupe dans un plan contenant l'axe **X,** on constate que la section transversale du bouclier **510** présente une forme arrondie conformée de sorte que le creux se situe entre le bouclier et le flanc extérieur **404.**

Le dispositif de protection **500** comporte par ailleurs une couronne **520** pour le montage du dispositif de protection à la jante de la roue.

La couronne **520,** illustrée seule en figure **3****,** présente une forme annulaire et comporte un centre **A.** Dans cet exemple, la couronne **520** est une pièce métallique, de préférence réalisée en acier.

La couronne **520** présente une partie de liaison **522** pour la liaison solidaire de la couronne **520** au bouclier **510,** et une partie de montage **524,** formant une seule pièce avec la partie de liaison **522,** la partie de montage **524** étant située radialement entre le centre **A** de la couronne **520** et la partie de liaison **522.** En d'autres termes, la partie de montage **524** s'étend radialement à l'intérieur de la partie de liaison **522.**

En d'autres termes, la partie de liaison **522** forme un contour périphérique externe **523** de la couronne, tandis que la partie de montage **524** est disposée en périphérie interne de la couronne annulaire **520.**

La partie de montage **524** comporte une pluralité d'éléments de montage **530** permettant le montage de la couronne **520** à la jante **300.** A cet effet, la partie montage **524** comporte une pluralité de protubérances **540** en forme d'oreille qui sont réparties selon la circonférence de la partie de montage **524** tout en étant distantes angulairement les unes des autres.

Chaque protubérance **540** fait radialement saillie vers le centre **A** de la couronne et comprend un élément de montage **530.**

Dans cet exemple, la partie de montage comporte huit protubérances **540** et éléments de montage **530** qui sont distantes angulairement d'un angle **β** de l'ordre de 45 degrés. L'angle **β** entre deux éléments de montage **530** adjacents est considéré dans un plan perpendiculaire à l'axe **X** de la couronne passant par le centre **A.**

Autrement dit, dans cet exemple non limitatif, les éléments de montage **530** sont répartis régulièrement sur la circonférence de la partie de montage **524.**

Les éléments de montage **530** comportent avantageusement des orifices **532** pour recevoir certains des organes de fixation **314** de la jante, et plus précisément certains des goujons **316** de la jante, référencés **316**a**.** Dans exemple, on constate que chaque protubérance **540** comporte un unique élément de montage **530,** à savoir un unique orifice **532.**

Comme expliqué plus haut, la fixation de la couronne à la jante est réalisée par le fait que les orifices **532** sont engagés avec certains des goujons **316a** de la jante, les écrous **318**a associés à ces goujons sont vissés contre la partie de montage afin de bloquer la couronne entre les écrous et la seconde partie de jante.

En se référant à nouveau aux figures **1** et **2****,** on constate que la partie de montage **524** s'étend radialement vers le centre **A** hors de la portion périphérique interne **514** du bouclier. La partie de liaison **522** est quant à elle noyée dans la portion périphérique interne **514.**

La partie de liaison **522** comporte par ailleurs des éléments de maintien **550** qui, dans cet exemple, sont constitués de trous **552** présentant une forme oblongue et traversant axialement la couronne en étant disposés le long de la circonférence de la partie de fixation. Plus précisément, les trous **552** sont situés sur le pourtour extérieur de la couronne.

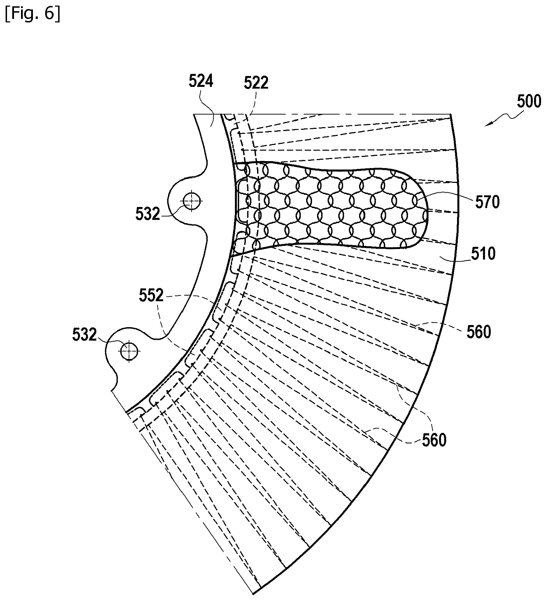

Pour réaliser la liaison entre le bouclier et la couronne, le dispositif de protection comporte en outre des fils textiles **560** qui coopèrent avec les éléments de maintien en étant engagés dans les trous **552** de façon à s'étendre de part et d'autre de la partie de liaison **522.** Ces fils sont noyés dans le matériau polymère de façon à assurer le maintien du bouclier à la couronne. Comme illustré en figure **6****,** on constate que les fils **560** s'étendent selon la largeur radiale du bouclier.

Comme illustré en figure **6****,** le bouclier comporte dans cet exemple au moins une armature **570,** de préférence un tricot. Ce dernier est préférentiellement métallique. Le tricot métallique s'étend de préférence sur toute la circonférence du bouclier et sur sensiblement toute sa largeur radiale. Il a pour effet d'augmenter la résistance du bouclier aux coupures sans empêcher sa déformabilité.

## Revendications

1. Dispositif de protection (500) de pneu d'une roue, comportant :
un bouclier (510) ayant une forme annulaire et comprenant un matériau polymère, le bouclier (510) ayant un bord périphérique externe (512) et une portion périphérique interne (514) opposée au bord périphérique externe ;
une couronne (520) pour le montage du dispositif de protection à une jante de la roue, la couronne ayant un centre et étant solidaire du bouclier et comprenant :
une partie de liaison (522) pour la liaison solidaire de la couronne (520) au bouclier (510) ;
une partie de montage (524), formant une seule pièce avec la partie de liaison, munie d'une pluralité d'éléments de montage (530) pour le montage de la couronne (520) à la jante, la partie de montage (524) étant située radialement entre le centre (A) de la couronne (520) et la partie de liaison (522) et comportant une pluralité de protubérances (540) en forme d'oreilles réparties selon la circonférence de la partie de montage en étant angulairement distantes les unes des autres, chaque protubérance (540) faisant radialement saillie vers le centre (A) de la couronne et comprenant au moins un des éléments de montage.

2. Dispositif de protection selon la revendication **1,** dans lequel les éléments de montage (530) comprennent des orifices (532) pour recevoir des organes de fixation (314) de la jante.

3. Dispositif de protection selon la revendication **2,** dans lequel chaque protubérance comporte un des orifices.

4. Dispositif de protection selon l'une quelconque des revendications précédentes, dans lequel la partie de montage (524) s'étend radialement vers le centre (A) de la couronne hors de la portion périphérique interne (514) du bouclier.

5. Dispositif de protection selon l'une quelconque des revendications précédentes, dans lequel la partie de liaison (522) est noyée dans la portion périphérique interne (514) du bouclier (510).

6. Dispositif de protection selon l'une quelconque des revendications précédentes dans lequel la partie de liaison (522) comporte des éléments de maintien (550), et dans lequel le dispositif de protection comporte en outre des fils textile (560) qui coopèrent avec les éléments de maintien tout en étant noyés dans le matériau polymère.

7. Dispositif de protection selon la revendication **6,** dans lequel les éléments de maintien (550) sont des trous (552) qui traversent axialement la couronne en étant disposés selon la circonférence de la partie de fixation, les fils textiles étant engagés dans les trous de façon à s'étendre de part et d'autre de la partie de liaison (522).

8. Dispositif de protection selon l'une quelconque des revendications précédentes, dans lequel le matériau polymère est un élastomère, de préférence un styrène-butadiène.

9. Dispositif de protection selon l'une quelconque des revendications précédentes, dans lequel le bouclier (510) comporte en outre au moins une armature, de préférence un tricot réalisé à partir de fils de métal.

10. Dispositif de protection selon l'une quelconque des revendications précédentes, dans lequel la couronne (520) est métallique.

11. Dispositif de protection selon l'une quelconque des revendications précédentes, dans lequel le bord périphérique externe s'étend dans un plan (P) qui est sensiblement coplanaire à la couronne.

12. Ensemble de roulement (100) comportant :
une roue comprenant une jante (300) munie d'un rebord intérieur (302) et d'un rebord extérieur (304), la roue (200) comportant un pneu (400) ayant au moins un flanc (404), ainsi que des premier et second talons (408, 410) montés contre les rebords intérieur et extérieur de la jante ; et
un dispositif de protection (500) selon l'une quelconque des revendications précédentes, la couronne étant fixée à la jante.

13. Ensemble de roulement selon la revendication **12,** dans lequel le bord périphérique externe du bouclier est en appui contre le flanc du pneu en exerçant une pression contre ledit flanc.

14. Ensemble de roulement selon la revendication **12** ou **13,** dans lequel la jante (300) est constituée d'une première partie de jante (310) incluant le rebord intérieur (302), et d'une seconde partie de jante (320) incluant le rebord extérieur (304), les première et seconde parties de jante étant fixées l'une à l'autre par des organes de fixation (314), et dans laquelle les éléments de montage (530) de la couronne sont montés à au moins certains des organes de fixation (314).

15. Ensemble de roulement selon la revendication **14,** dans lequel le nombre d'éléments de montage est strictement inférieur au nombre d'organes de fixation, de préférence inférieur ou égal à la moitié du nombre d'organes de fixation.

16. Ensemble de roulement selon la revendication **14** ou **15,** dans lequel la couronne (520) est fixée via les éléments de montage à un organe de fixation sur deux ou sur trois.

17. Ensemble de roulement selon l'une quelconque des revendications **14** à **16,** dans lequel un des organes de fixation (314) est disposé entre deux protubérances adjacentes.

18. Ensemble de roulement selon l'une quelconque des revendications **14** à **17,** dans lequel les organes de fixation (314) comprennent des goujons (316,316a) faisant saillie axialement depuis la seconde partie de jante.

## Patentansprüche

1. Vorrichtung zum Schutz (500) eines Reifens eines Rades, die beinhaltet:
ein Schild (510), das eine ringförmige Gestalt aufweist und ein Polymermaterial umfasst, wobei das Schild (510) einen äußeren Umfangsrand (512) und einen inneren Umfangsabschnitt (514) gegenüber dem äußeren Umfangsrand aufweist,
einen Kranz (520) zur Montage der Schutzvorrichtung an einer Felge des Rades, wobei der Kranz ein Zentrum aufweist und mit dem Schild fest verbunden ist und umfasst:
einen Verbindungsteil (522) für die feste Verbindung des Kranzes (520) mit dem Schild (510),
einen Montageteil (524), der ein einziges Stück mit dem Verbindungsteil ausbildet und mit mehreren Montageelementen (530) zum Montieren des Kranzes (520) an der Felge versehen ist, wobei der Montageteil (524) sich radial zwischen dem Zentrum (A) des Kranzes (520) und dem Verbindungsteil (522) befindet und mehrere Fortsätze (540) in Form von Ohren beinhaltet, die dem Umfang des Montageteils entlang verteilt sind, wobei sie winkelförmig voneinander beabstandet sind, wobei jeder Fortsatz (540) radial zu dem Zentrum (A) des Kranzes hin wegragt und zumindest eines der Montageelemente umfasst.

2. Schutzvorrichtung nach Anspruch 1, wobei die Montageelemente (530) Öffnungen (532) zum Aufnehmen von Befestigungselementen (314) der Felge umfassen.

3. Schutzvorrichtung nach Anspruch 2, wobei jeder Fortsatz eine der Öffnungen beinhaltet.

4. Schutzvorrichtung nach einem der vorhergehenden Ansprüche, wobei der Montageteil (524) sich radial zu dem Zentrum (A) des Kranzes hin außerhalb des inneren Umfangsabschnitts (514) des Schilds erstreckt.

5. Schutzvorrichtung nach einem der vorhergehenden Ansprüche, wobei der Verbindungsteil (522) in den inneren Umfangsabschnitt (514) des Schilds (510) eingebettet ist.

6. Schutzvorrichtung nach einem der vorhergehenden Ansprüche, wobei der Verbindungsteil (522) Halteelemente (550) beinhaltet, und wobei die Schutzvorrichtung ferner Textilfäden (560) beinhaltet, die mit den Halteelementen zusammenwirken, wobei sie in das Polymermaterial eingebettet sind.

7. Schutzvorrichtung nach Anspruch 6, wobei die Halteelemente (550) Löcher (552) sind, welche den Kranz axial durchdringen, wobei sie entlang des Umfangs des Befestigungsteils angeordnet sind, wobei die Textilfäden so mit den Löchern in Eingriff stehen, dass sie sich auf beiden Seiten des Verbindungsteils (522) erstrecken.

8. Schutzvorrichtung nach einem der vorhergehenden Ansprüche, wobei das Polymermaterial ein Elastomer ist, vorzugsweise ein Styrol-Butadien.

9. Schutzvorrichtung nach einem der vorhergehenden Ansprüche, wobei der Kranz (510) ferner zumindest eine Bewehrung beinhaltet, vorzugsweise ein aus Metallfäden verwirklichtes Gewirk.

10. Schutzvorrichtung nach einem der vorhergehenden Ansprüche, wobei der Kranz (520) metallisch ist.

11. Schutzvorrichtung nach einem der vorhergehenden Ansprüche, wobei der äußere Umfangsrand sich in einer Ebene (P) erstreckt, die im Wesentlichen komplanar mit dem Kranz ist.

12. Rollanordnung (100), die beinhaltet:
ein Rad, das eine Felge (300) umfasst, die mit einem inneren Rand (302) und einem äußeren Rand (304) versehen ist, wobei das Rad (200) einen Reifen (400) mit mindestens einer Seitenwand (404) sowie einem ersten und einem zweiten Wulst (408, 410) aufweist, die gegen den inneren und den äußeren Rand der Felge montiert sind, und
eine Schutzvorrichtung (500) nach einem der vorhergehenden Ansprüche, wobei der Kranz an der Felge befestigt ist.

13. Rollanordnung nach Anspruch 12, wobei der äußere Umfangsrand des Schildes gegen die Seitenwand des Reifens anliegt, wobei er einen Druck gegen die Seitenwand ausübt.

14. Rollanordnung nach Anspruch 12 oder 13, wobei die Felge (300) aus einem ersten Felgenteil (310), der den inneren Rand (302) beinhaltet, und einem zweiten Felgenteil (320) besteht, der den äußeren Rand (304) beinhaltet, wobei der erste und zweite Felgenteil aneinander durch Befestigungselemente (314) befestigt sind, und wobei die Montageelemente (530) des Kranzes zumindest an einigen der Befestigungselemente (314) montiert sind.

15. Rollanordnung nach Anspruch 14, wobei die Anzahl der Montagelemente strikt kleiner ist als die Anzahl der Befestigungselemente, vorzugsweise kleiner als die oder gleich der Hälfte der Anzahl der Befestigungselemente.

16. Rollanordnung nach Anspruch 14 oder 15, wobei der Kranz (520) über die Montageelemente an jedem zweiten oder dritten Befestigungselement befestigt ist.

17. Rollanordnung nach einem der Ansprüche 14 bis 16, wobei eines der Befestigungselemente (314) zwischen zwei benachbarten Fortsätzen angeordnet ist.

18. Rollanordnung nach einem der Ansprüche 14 bis 17, wobei die Befestigungselemente (314) Bolzen (316, 316a) umfassen, die axial von dem zweiten Felgenteil wegragen.

## Claims

1. A device (500) for protecting the tire of a wheel, including:
a shield (510) having an annular shape and comprising a polymer material, the shield (510) having an outer peripheral edge (512) and an inner peripheral segment (514) opposite to the outer peripheral edge;
a crown (520) for mounting the protection device on a rim of the wheel, the crown having a center and being secured to the shield and comprising:
a connection portion (522) for securely connecting the crown (520) to the shield (510);
a mounting portion (524), forming a single piece with the connection portion, provided with a plurality of mounting elements (530) for mounting the crown (520) on the rim, the mounting portion (524) being radially located between the center (A) of the crown (520) and the connection portion (522) and including a plurality of lug-shaped protuberances (540) distributed along the circumference of the mounting portion while being angularly spaced from each other, each protuberance (540) radially protruding towards the center (A) of the crown and comprising at least one of the mounting elements.

2. The protection device according to claim 1, wherein the mounting elements (530) comprise orifices (532) to receive members (314) for fixing the rim.

3. The protection device according to claim 2, wherein each protuberance includes one of the orifices.

4. The protection device according to any one of the preceding claims, wherein the mounting portion (524) radially extends towards the center (A) of the crown out of the inner peripheral segment (514) of the shield.

5. The protection device according to any one of the preceding claims, wherein the connection portion (522) is embedded in the inner peripheral segment (514) of the shield (510).

6. The protection device according to any one of the preceding claims, wherein the connection portion (522) includes holding elements (550), and wherein the protection device further includes textile yarns (560) which cooperate with the holding elements while being embedded in the polymer material.

7. The protection device according to claim 6, wherein the holding elements (550) are holes (552) which axially pass through the crown by being disposed along the circumference of the fixing portion, the textile yarns being engaged in the holes so as to extend on either side of the connection portion (522).

8. The protection device according to any one of the preceding claims, wherein the polymer material is an elastomer, preferably a styrenebutadiene.

9. The protection device according to any one of the preceding claims, wherein the shield (510) further includes at least one reinforcement preferably a knitted fabric made from metal yarns.

10. The protection device according to any one of the preceding claims, wherein the crown (520) is metallic.

11. The protection device according to any one of the preceding claims, wherein the outer peripheral edge extends in a plane (P) which is substantially coplanar with the crown.

12. A rolling assembly (100) including:
a wheel comprising a rim (300) provided with an internal flange (302) and an external flange (304), the wheel (200) including a tire (400) having at least one sidewall (404), as well as first and second beads (408, 410) mounted against the internal and external flanges of the rim; and
a protection device (500) according to any one of the preceding claims, the crown being fixed to the rim.

13. The rolling assembly according to claim 12, wherein the outer peripheral edge of the shield contacts the sidewall of the tire by exerting a pressure against said sidewall.

14. The rolling assembly according to claim 12 or 13, wherein the rim (300) is composed of a first rim portion (310) including the internal flange (302), and of a second rim portion (320) including the external flange (304), the first and second rim portions being fixed to each other by fixing members (314), and wherein the crown mounting members (530) are mounted on at least some of the fixing members (314).

15. The rolling assembly according to claim 14, wherein the number of mounting elements is strictly smaller than the number of fixing members, preferably less than or equal to half the number of fixing members.

16. The rolling assembly according to claim 14 or 15, wherein the crown (520) is fixed via the mounting elements to one every two or every three fixing members.

17. The rolling assembly according to any one of claims 14 to 16, wherein one of the fixing members (314) is disposed between two adjacent protuberances.

18. The rolling assembly according to any one of claims 14 to 17, wherein the fixing members (314) comprise studs (316, 316a) axially protruding from the second rim portion.
